# EUROPEAN PATENT APPLICATION

(11) **EP 2 962 930 A1**
(43) Date of publication of application: **06.01.2016**
(21) Application number: 14002280.7
(22) Date of filing: 03.07.2014
(51) Int. Cl.: B63C 9/00, G06Q 10/08, G07C 9/00, G08B 21/22

(54) **Improving the safety on-board of large vehicles for many passengers**

(71) Applicant: Astrium GmbH, 82024 Taufkirchen (DE)
(72) Inventor: Schäfer, Christof Dr., D-85551 Kirchheim (DE)

(57) **Abstract**

The invention relates to a system for improving the safety on-board of large vehicles for many passengers comprising traceable devices (10) for carrying by persons (12) on-board of a vehicle (28), a tracing system (14, 16) for detecting traceable devices on the vehicle and for providing tracing information (18) of the detected traceable devices, one or more target applications (20, 22, 24), wherein each target application is configured to execute a predefined task based on tracing information of the detected traceable devices, and a processing system (26) for receiving tracing information of the detected traceable devices from the tracing system and for supplying the received tracing information to one or more of the target applications.

## Description

### TECHNICAL FIELD

The invention relates to improving the safety on-board of large vehicles for many passengers like cruise or cargo ships, particularly to a system and a method for improving the safety on-board of large vehicles for many passengers.

### BACKGROUND

The UK patent application GB2430062A describes a marine crew security system, which uses message passing between a base station on a ship and personal safety transceivers carried by crew members of the ship. The system can trigger an alarm in case of a failure of periodic message transmission between the base station and a personal safety transceiver. In an embodiment, upon activation of the alarm mechanism, the present geographical location of the base unit can be determined by means of a base unit determination logic, which uses for example a global positioning system for accurate position determination, and be transmitted with an emergency indication message over a communication link. Since the base station is installed on the ship, the determined geographical location corresponds to the location of the ship.

### SUMMARY OF INVENTION

It is an object of the invention to further improve the safety on-board of large vehicles for many passengers.

This object is achieved by the subject matter of the independent claims.

Further embodiments are shown by the dependent claims.

The present invention proposes to detect persons on-board of a large vehicle for many passengers like a cruise or cargo ship by means of traceable devices such as RF (Radio Frequency) transponders, particularly RFID (Radio Frequency Identification) devices and to execute a predefined task based on tracing information of the traceable devices. The traceable devices can be carried by persons, for example in the form of a badge, a RFID device, or a RFID watch. The traceable device allows determining the position of the carrying person for example at a given interval or on an incident. Position determination can be performed with an infrastructure installed on-board of the vehicle, for example with RFID gates, beacons, WiFi™ or other RF networks. Different applications like (application 1) a completeness check in case of evacuation of a vehicle, (application 2) the identification of vehicle sections with remaining persons in emergency cases, or (application 3) the fencing of people like geo-fencing of children can be implemented with the invention by executing a respective task. Also, the invention can be implemented for (option 1) an anonymous tracking without linking tracking information to an individual, for (option 2) an anonymous tracking with linking traceable devices to specific categories such as crew member, child etc., which can give further information for example regarding access to certain ship sections, geo-fencing etc., or for (option 3) a fully personalized tracking, which can also enable customized passenger services. Thus, the position determination on-board of a large vehicle like a ship according to the present invention offers a plurality of services and allows improving the safety on-board of the vehicle.

An embodiment of the invention relates to a system for improving the safety on-board of large vehicles for many passengers comprising traceable devices for carrying by persons on-board of a vehicle, a tracing system for detecting traceable devices on the vehicle and for providing tracing information of the detected traceable devices, one or more target applications, wherein each target application is configured to execute a predefined task based on tracing information of the detected traceable devices, and a processing system for receiving tracing information of the detected traceable devices from the tracing system and for supplying the received tracing information to the one or more of the target applications. Furthermore, position determination with the tracing system can be implemented by means of so-called indoor tracking systems or RFID or WiFi™ solutions for indoor position determination.

The traceable devices may comprise RF transponders, particularly RFID devices, and/or mobile devices being configured for tracing by the tracing system. For example, the traceable devices may be RFID badges or smartphones configured to be traceable (e.g. by an app).

The tracing system may comprise several radio base stations, wherein each radio base station is configured for detecting traceable devices within its radio coverage area and transmitting information on detected traceable devices to the processing system. The radio base stations may comprise RFID gates, beacons, and stations of a WiFi™ or RF network.

The target applications may comprise a target application for checking completeness of a group of traceable devices assigned to persons on-board of the vehicle, a target application for identifying sections of the vehicle with remaining traceable devices assigned to persons in case of an emergency, and/or a target application for fencing of traceable devices assigned to persons in the vehicle.

The processing system may be configured to analyze received tracing information and to select a target application depending on the analyzed tracing information. Particularly, the processing system may implement an algorithm for selecting a target application, which can be implemented to analyze a unique identifier of a traceable device with regard to a predefined selection scheme for target application.

The system may be implemented for an anonymously processing of the tracing information, an anonymously processing of the tracing information with a link of each processed tracing information to a specific category, and/or a personalized processing of the tracing information.

A further embodiment of the invention relates to a method for improving the safety on-board of large vehicles for many passengers by detecting traceable devices carried by persons on-board of a vehicle and providing tracing information of the detected traceable devices, executing one or more predefined tasks based on the tracing information, and processing tracing information of the detected traceable devices and supplying the tracing information for executing the one or more predefined tasks.

The one or more predefined tasks may comprise checking completeness of a group of traceable devices assigned to persons on-board of the vehicle, identifying sections of the vehicle with remaining traceable devices assigned to persons in case of an emergency, and/or fencing of traceable devices assigned to persons in the vehicle.

The processing of tracing information of the traceable devices may comprise analyzing received tracing information and selecting a predefined task depending on the analyzed tracing information.

The method may be implemented for anonymously processing of the tracing information, anonymously processing of the tracing information with a link of each processed tracing information to a specific category, and/or personalized processing of the tracing information.

A further embodiment of the invention relates to a computer program, which implements a method according to the invention and as described herein.

According to a further embodiment of the invention, a record carrier storing a computer program according to the invention may be provided, for example a CD-ROM, a DVD, a memory card, a diskette, or a similar data carrier suitable to store the computer program for electronic access.

A further embodiment of the invention relates to a computer being configured by a computer program of the invention and as described herein for receiving and processing tracing information and for executing one or more predefined tasks based on the tracing information.

Finally, an embodiment of the invention relates to a portable device being configured to be used as traceable device with a system of the invention and as described herein. The portable device can be implemented for example as RFID badge.

These and other aspects of the invention will be apparent from and elucidated with reference to the embodiments described hereinafter.

The invention will be described in more detail hereinafter with reference to exemplary embodiments. However, the invention is not limited to these exemplary embodiments.

### BRIEF DESCRIPTION OF DRAWINGS

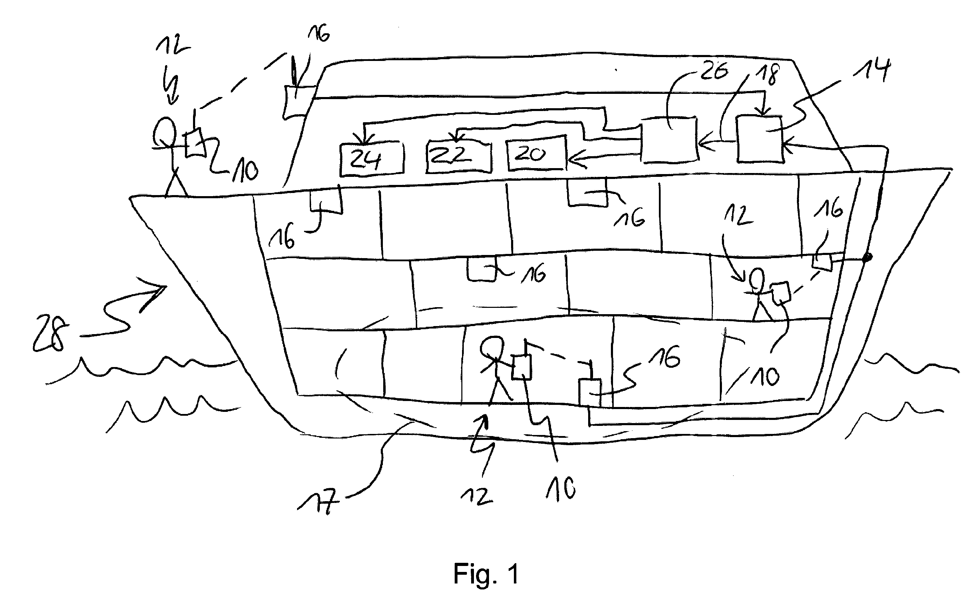

- Fig. 1: shows a cruise ship with an embodiment of a system for improving the safety on-board of the ship according to the invention.

### DESCRIPTION OF EMBODIMENTS

In the following, functionally similar or identical elements may have the same reference numerals. The embodiments of the invention are described with regard to a cruise ship as an example of a large vehicle for many passengers. However, the invention is not restricted to the application on ships, but can applied to any large vehicle provided for transportation of many passengers, i.e. to any kind of mass transportation means for persons.

The following aspects (problems) are addressed by the present invention:
Aspect 1: Emergency Incident
   Recent incidents with cruise ships have shown, that in an emergency case it is vital to know whether all passengers and staff members show up at the evacuation points and are rescued and in which segments of the ship there are remaining individuals, who have not shown up at the evacuation points for whatever reason. State of the art today is that each passenger is allocated a certain evacuation point - typically the one closest to the allocated cabin - at which to report in case of emergency. Whereas this system works fine during night time, when the passengers are in their cabins, it is not optimal during the day potential resulting in long ways for the passenger when roaming around the whole ship. In addition there is no knowledge on the whereabouts of individuals not showing up at their allocated evacuation points. In analogy there is no knowledge on segments containing remaining individuals for rescue action.
Aspect 2: Location-aware Services
   Today location-aware services or location-based services (LBS) are widely used providing guidance, recommendations, advertisement etc. in our everyday environment. Typically, they are provided for commercial environments, entertainment hotspots and in complex public environments unknown to the majority of visitors/users. This characterisation also holds for cruise ships: They represent limited but large and complex public areas offering entertainment, shopping, events etc. to passengers. Consequently location-aware service offerings similar to what is known from large shopping centres, entertainment / amusement parks etc. would be of interest to the passengers. Installation of such services requires the capability of real-time positioning of individuals on the cruise ship, which does typically not exist today..
Aspect 3: On-board Safety
   Today due to lack of positioning capability within the cruise ship safety applications like geo-fencing, e.g., for children, or man-over board monitoring cannot be implemented.

In order to address the above aspects and to solve the mentioned problems, the present invention encompasses a system and method, which
(1) is based on a suitable method, system and infrastructure installed on-board a ship like a cruise ship, which allows to trace individual wearable devices and thus the individuals wearing the device,
(2) is based on a traceable device to be carried by each individual on-board a ship; such device can be a/ integrated into a wearable badge used for, e.g., identification, e-payment or access to cabins or other rooms, b/ a wristband or any other suitable wearable design; depending on the tracing method (1) implemented such device can either be an active or a passive device,
(3) is based on a wearable registration device, which allows for the registration of the devices (2) at any place on the cruise ship,
(4) contains a processing unit, system and software, which receives the tracing information of the individual devices (2) and feeds the tracing data into the target applications listed as applications 1 to 3 mentioned above,
(5) one common or one processing unit, system and software each realising the applications 1 to 3 mentioned above,
(6) a communication link to transfer data between the processing unit (4) and the devices (2), the infrastructure (1) and/or the registration device (3),
(7) a communication link to transfer data between the processing unit (4) and the applications' processing unit(s) (5).

An embodiment of a system according to the invention will now be explained with regard to Fig. 1, which shows a ship 28 like a cruise ship comprising a plurality of cabins and rooms for passengers 12. On-board of the ship 28, a safety system for tracking the passengers 12 is installed. The safety system comprises several radio base stations 16 installed at different positions on the ship 28. Each radio base station 16 can communicate with traceable devices 10, which reside in its radio coverage area 17. The traceable devices 10 are portable by the passengers. The radio coverage areas 17 of different radio base stations 16 can overlap. Each radio base station 16 can communication with a tracing processing unit 14, which can configured to determine the position of traceable devices 10 on-board of the ship 28, for example according to an indoor tracking technology. The tracing processing unit 14 supplies tracing information 18 on the detected traceable devices 10 to an application selection processing unit 26, which supplies the received tracing information to one or more of target application processing units 20, 22, 24.

The traceable devices 10 may be any device configured to establish a RF communication link with the radio base stations 16, either passive like a RF transponder, particularly a RFID device such as a RFID badge, or active like a smartphone with integrated WiFi™.

The radio base stations 16 may any station configured to establish a RF communication link with the traceable devices 10, for example a RFID gate, which detects all traceable devices 10 residing in its radio coverage are 17, a RF beacon, which actively transmits search request signals for detecting traceable devices 10 residing in its radio coverage area 17, or a WiFi™ base station provided in passenger cabins for internet access.

The radio base stations 16 can be connected to a ship internal communication network such as a LAN (Local Area Network) or a RF communication technology such as WiFi™ or Bluetooth. The radio base stations 16 may be implemented in various forms, for example as wearable devices, or the stations may be integrated in smoke detectors or other indoor elements, e.g. sprinklers, to allow for automated autonomous indoor tracking in non/co/operative indoor environments.

The information on a detected traceable device 10, which can be transmitted by a radio base station 16, may comprise an unique identifier of the traceable device 10, an identifier of the transmitting radio base station 16 and/or also other information like position information of the traceable device 10 (if the device 10 or the radio base station 16 is configured to determined actual position of the device 10 on the ship 28 preferably by means of indoor tracking technology).

The tracing processing unit 14 can be configured to determine the position of traceable devices 10 on-board of the ship 28 by processing the tracing information on detected devices 10 received from the radio base stations 16. For example, the tracing processing unit 14 may comprise a database containing the positions of all radio base stations 16 on-board of the ship 28, and can determine the position of a detected device 10 upon receipt of information on the device 10 from the respective radio base station 16 by consulting the database with the identifier of the radio base station 16. Also, the positions of traceable devices 10 can be determined by means of indoor tracking technologies, which can be implemented in the tracing processing unit 14.

The tracing processing unit 14 supplies the tracing information 18 of detected devices 10 to the application selection processing unit 26. The application selection processing unit 26 selects one or more of the target application processing units 20, 22, 24 based on the received tracing information. The processing comprises an analysis of the received tracing information and a selection of the units 20, 22, 24 based on the analysis. The analysis may comprise a checking of the unique identifiers of detected devices 10 by means of a database, which contains assignments of the unique identifiers to one or more target application processing units 20, 22, 24. Particularly, the traceable device 10 of an individual (passenger, crew member) can be assigned to different target application processing units 20, 22, 24 depending on the individual's status.

Examples of the first, second and third target application processing units 20, 22, and 24 are described in the following:
Application 1 (target application processing unit 20): completeness check in case of evacuation of the ship
   In case of evacuation of the ship, each passenger on-board the cruise ship reports to the nearest emergency station. A crew member registers each passenger reporting to the emergency station by registration of the traceable device of each passenger by means of a wearable registration device. Information on the registered traceable devices is transmitted from the wearable registration device to the tracing processing unit, which can determine the position of the wearable device and supply the determined position with the information on the registered traceable device to the application selection processing unit, which can gather the registration data from all emergency stations or wearable registration devices and select the target application processing unit for compiling a completeness report of the passengers.
Application 2 (target application processing unit 22): identification of ship sections with remaining persons in case of emergency
   In case of individuals missing at the completeness check of application 1, their actual position on-board the ship can be determined by means of determining the actual position of the traceable device wrt. the tracing infrastructure comprising the radio base stations. The tracing processing unit supplies the position data to application selection processing unit, which selects the second target application processing unit for identifying the sections of the cruise ship with remaining individuals as basis for immediate or future rescue actions.
Application 3 (target application processing unit 24): geo-fencing for children
   The invention also allows the implementation and provision of a safety service to passengers travelling with children. By means of the traceable devices worn by children and the their actual position on-board the cruise ship determined by the tracing processing unit based on the tracing infrastructure comprising the radio base stations and the entire system alarms are triggered, when children enter predetermined no-go areas, e.g., technical areas, off limit zones etc. The tracing processing unit provides the tracing data to the application selection processing unit via the communication link, which select the third target application processing unit for performing the geo-fencing for children on the ship and outputting an alarm if children enter areas or sections of the ship, which are not allowed for children.
   The invention can be used as basis for further applications including, but not limited to on-board A to B navigation services for passengers and crew members, location-aware commercial passenger services including location-aware advertising, shopping guides and event management, implementation, verification and validation of e-payment, location-aware applications and processes for operational and facility management purposes, recording and analysis of crew trainings, incident monitoring, recording and analyses.

The present invention can be implemented in three options, namely

Option 1: Anonymously not linking tracking information to an individual.

Option 2: Anonymously, but linked to a specific category, e.g., crew member, child, ..., which gives further information, e.g., regarding access, geo-fencing, etc.

Option 3: fully personalised, also enabling customised passenger services.

The present invention allows improving the safety on-board of ships by implementing a tracing of devices, which can be easily carried by persons on-board of the ship. Thus, the invention allows implementing functions like determination of the position of persons on the ship or checking the completeness of groups of persons on a ship or controlling the stay of persons in specific sections of the ship. At least some of the functionality of the invention may be performed by hard- or software. In case of an implementation in software, a single or multiple standard microprocessors or microcontrollers may be used to process a single or multiple algorithms implementing the invention.

### REFERENCE NUMERALS AND ACRONYMS

- 10: traceable device
- 12: passenger
- 14: tracing processing unit
- 16: radio base station
- 17: radio coverage area
- 18: tracing information
- 20: first target application processing unit
- 22: first target application processing unit
- 24: first target application processing unit
- 26: application selection processing unit
- 28: cruise ship

## Claims

1. A system for improving the safety on-board of large vehicles for many passengers comprising
- traceable devices (10) for carrying by persons (12) on-board of a vehicle (28),
- a tracing system (14, 16) for detecting traceable devices on the vehicle and for providing tracing information (18) of the detected traceable devices,
- one or more target applications (20, 22, 24), wherein each target application is configured to execute a predefined task based on tracing information of the detected traceable devices, and
- a processing system (26) for receiving tracing information of the detected traceable devices from the tracing system and for supplying the received tracing information to the one or more of the target applications.

2. The system of claim 1, wherein the traceable devices (10) comprise RF transponders, particularly RFID devices, and/or mobile devices being configured for tracing by the tracing system.

3. The system of claim 1 or 2, wherein the tracing system comprises several radio base stations (16), wherein each radio base station (16) is configured for detecting traceable devices within its radio coverage area (17) and transmitting information on detected traceable devices to the processing system.

4. The system of claim 3, wherein the radio base stations comprise RFID gates, beacons, stations of a WiFi™ or RF network.

5. The system of any of the preceding claims, wherein the target applications comprise
- a target application (20) for checking completeness of a group of traceable devices assigned to persons on-board of the vehicle,
- a target application (22) for identifying sections of the vehicle with remaining traceable devices assigned to persons in case of an emergency, and/or
- a target application (24) for fencing of traceable devices assigned to persons in the vehicle.

6. The system of any of the preceding claims, wherein the processing system is configured to analyze received tracing information and to select a target application depending on the analyzed tracing information.

7. The system of any of the preceding claims being implemented for
- an anonymously processing of the tracing information,
- an anonymously processing of the tracing information with a link of each processed tracing information to a specific category, and/or
- a personalized processing of the tracing information.

8. A method for improving the safety on-board of large vehicles for many passengers by
- detecting traceable devices carried by persons on-board of a vehicle and providing tracing information of the detected traceable devices (S10),
- executing one or more predefined tasks based on the tracing information, and
- processing tracing information of the detected traceable devices and supplying the tracing information for executing the one or more predefined tasks.

9. The method of claim 8, wherein the one or more predefined tasks comprise
- checking completeness of a group of traceable devices assigned to persons on-board of the vehicle,
- identifying sections of the vehicle with remaining traceable devices assigned to persons in case of an emergency, and/or
- fencing of traceable devices assigned to persons in the vehicle.

10. The method of claim 8 or 9, wherein the processing of tracing information of the traceable devices comprises analyzing received tracing information and selecting a predefined task depending on the analyzed tracing information.

11. The method of claim 8, 9 or 10 being implemented for
- anonymously processing of the tracing information,
- anonymously processing of the tracing information with a link of each processed tracing information to a specific category, and/or
- personalized processing of the tracing information.

12. A computer program implementing a method of any of the claims 8 to 11.

13. A record carrier storing a computer program according to claim 12.

14. A computer being configured by a computer program of claim 12 for receiving and processing tracing information and for executing one or more predefined tasks based on the tracing information.

15. A portable device (10) being configured to be used as traceable device with a system of any of claims 1 to 7.
